(19) Europäisches Patentamt
European Patent Office
Office européen des brevets

(11) **EP 3 228 993 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(51) Int Cl.:
**G01D 5/347** (2006.01)

(21) Anmeldenummer: **16163847.3**

(22) Anmeldetag: **05.04.2016**

(54) **LÄNGENMESSEINRICHTUNG**

LENGTH MEASURING DEVICE

DISPOSITIF DE MESURE DE LONGUEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.10.2017 Patentblatt 2017/41**

(73) Patentinhaber: **Dr. Johannes Heidenhain GmbH 83301 Traunreut (DE)**

(72) Erfinder: **Peterlechner, Andreas 5121 St. Radegund (AT)**

(56) Entgegenhaltungen:
**EP-A2- 0 382 706    DE-A1- 3 327 266**
**DE-A1-102007 044 128**

**Beschreibung**

GEBIET DER TECHNIK

Die vorliegende Erfindung betrifft eine Längenmesseinrichtung gemäß den Merkmalen des Anspruchs 1.

STAND DER TECHNIK

Derartige Längenmesseinrichtungen dienen zur Messung von Längen sowie Wegen und werden insbesondere bei Bearbeitungsmaschinen zur Messung der Relativbewegung eines Werkzeugs bezüglich eines zu bearbeitenden Werkstücks, bei Koordinatenmessmaschinen und vermehrt auch in der Halbleiterindustrie eingesetzt.

Die DE 33 27 266 A1 offenbart eine gattungsbildende Längenmesseinrichtung gemäß dem Oberbegriff des Anspruchs 1. Zur Ankopplung des Abtastwagens an den Mitnehmer wird ein biegesteifes Verbindungselement eingesetzt. Die Ankopplung dieses biegesteifen Verbindungselementes an den Abtastwagen erfolgt an einer einzigen Position. Um den Abtastwagen im Gleichgewicht zu halten, ist diese Position im Zentrum des Abtastwagens vorgesehen.

ZUSAMMENFASSUNG DER ERFINDUNG

Der vorliegenden Erfindung liegt die Aufgabe zugrunde, eine Längenmesseinrichtung anzugeben, die kompakt aufgebaut ist und mit der eine genaue Positionsmessung ermöglicht wird.

Diese Aufgabe wird erfindungsgemäß durch die Längenmesseinrichtung mit den Merkmalen des Anspruchs 1 gelöst.

Diese Längenmesseinrichtung umfasst:

einen in Messrichtung längserstreckten Träger mit einem daran angeordneten Maßstab;

einen Abtastwagen zur Abtastung einer Messteilung des Maßstabs, wobei der Abtastwagen an zumindest einer Führungsfläche in Messrichtung längsgeführt ist;

eine Kupplung, mit welcher der Abtastwagen in Messrichtung steif und quer dazu nachgiebig an einen Mitnehmer angekoppelt ist, wobei die Kupplung ein in Messrichtung verlaufendes Verbindungselement umfasst, das an einem ersten Drehgelenk am Abtastwagen und an einem zum ersten Drehgelenk in Messrichtung beabstandeten zweiten Drehgelenk am Mitnehmer drehbar gelagert ist, und wobei der Abtastwagen an die zumindest eine Führungsfläche angedrückt wird, wobei

ein erstes Federmittel zwischen dem Verbindungselement und dem Mitnehmer vorgesehen ist, das eine Andruckkraft auf den Abtastwagen ausübt und an die zumindest eine Führungsfläche andrückt, und

ein zweites Federmittel zwischen dem Verbindungselement und dem Abtastwagen vorgesehen ist, das eine Andruckkraft auf den Abtastwagen ausübt und an die zumindest eine Führungsfläche andrückt, wobei das erste Federmittel von dem zweiten Federmittel in Messrichtung beabstandet angeordnet ist.

Das erste Federmittel übt an einer ersten Position eine Andruckkraft auf den Abtastwagen aus und das zweite Federmittel übt an einer zur ersten Position in Messrichtung beabstandeten Position eine Andruckkraft auf den Abtastwagen aus. Die erste Position und die zweite Position sind als Angriffspositionen der durch die Federmittel eingeleiteten Kräfte auf den Abtastwagen zu verstehen.

Mit der erfindungsgemäßen Längenmesseinrichtung ist eine präzise Positionsmessung möglich, da der Abtastwagen schwingungsstabil gehalten wird. Da die Krafteinleitung auf den Abtastwagen an mehreren in Messrichtung voneinander beabstandeten Positionen erfolgt, werden die Biegespannungen in dem Verbindungselement und im Abtastwagen minimiert. Dadurch kann das Verbindungselement fragiler und somit gewichtssparender (verringerte Masse) gestaltet werden, wodurch die Vibrationsfestigkeit steigt und zur Verbesserung der Messgenauigkeit beiträgt.

Das Verbindungselement ist gegen Zug- und Druckspannungen möglichst steif auszubilden.

Ein platzsparender Aufbau ist gewährleistet, da für die Elemente der Ankopplung die gesamte Länge des Abtastwagens ausgenutzt werden kann. Das Verbindungselement kann platzsparend über die gesamte Länge des Abtastwagens untergebracht werden und somit relativ lang in Messrichtung ausgebildet sein. Dieses relativ lange beidseitig gelenkig gelagerte Verbindungselement gleicht Montagetoleranzen sowie Abstandsänderungen im Betrieb - hervorgerufen durch Ausrichtungsabweichungen - zwischen dem Maßstab und dem Mitnehmer senkrecht zur Messrichtung besonders gut aus. Die in Messrichtung dabei auftretenden Messfehler sind umso kleiner, je länger das Verbindungselement ist.

Die Drehgelenke sind in Messrichtung voneinander beabstandet angeordnet. Das erste Drehgelenk ist an der Position (in Messrichtung betrachtet) des ersten Federmittels oder zumindest in deren Nähe angeordnet und das zweite Drehgelenk ist an der Position (in Messrichtung betrachtet) des zweiten Federmittels oder zumindest in deren Nähe angeordnet.

Die Drehgelenke sind insbesondere dazu ausgebildet folgende Freiheitsgrade zwischen dem Abtastwagen und dem Mitnehmer auszugleichen:

Abstand, Querverschiebung, Gierwinkel, Nickwinkel, Rollwinkel

Die quer zur Messrichtung nachgiebige Ankopplung des Abtastwagens an den Mitnehmer in diesen Freiheitsgraden kann mittels Drehgelenken erfolgen, die als eine Anordnung von Festkörpergelenken oder als Kugelgelenke ausgebildet sind.

Besonders vorteilhaft ist, wenn die beiden Drehgelenke jeweils als Kugelgelenke ausgebildet sind. In diesem Fall haben die beiden Federmittel die zusätzliche Funktion die jeweilige Kugel in einen zur Kugel korrespondierenden Aufnahmesitz zu drängen und somit Kugel und Aufnahmesitz aneinanderzudrängen, und dadurch eine gelenkige, aber in Messrichtung spielfreie Verbindung herzustellen.

Weitere vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

## KURZE BESCHREIBUNG DER ZEICHNUNGEN

Es zeigt

Figur 1      eine Prinzipdarstellung einer erfindungsgemäßen Längenmesseinrichtung;

Figur 2      einen Querschnitt einer konkreten Ausgestaltung einer erfindungsgemäßen Längenmesseinrichtung;

Figur 3      einen Querschnitt A-A der Längenmesseinrichtung gemäß Figur 2;

Figur 4      einen Querschnitt B-B der Längenmesseinrichtung gemäß Figur 2;

Figur 5      einen Querschnitt C-C der Längenmesseinrichtung gemäß Figur 2, und

Figur 6      einen Querschnitt D-D der Längenmesseinrichtung gemäß Figur 2.

## BESCHREIBUNG DER AUSFÜHRUNGSFORMEN

Die Erfindung ist am Beispiel einer optischen Längenmesseinrichtung dargestellt, mit der die Relativlage zweier in Messrichtung X gegeneinander verschiebbarer Objekte gemessen werden soll. Zur Positionsmessung wird ein Maßstab 1 der Längenmesseinrichtung an einem dieser Objekte befestigt und ein Abtastwagen 2 der Längenmesseinrichtung an dem anderen dieser Objekte befestigt. Dabei wird der Maßstab 1 von dem relativ zum Maßstab 1 in Messrichtung X bewegbaren Abtastwagen 2 abgetastet. Der Maßstab 1 weist eine Messteilung 11 auf, die von dem Abtastwagen 2 abgetastet wird. Dazu umfasst der Abtastwagen 2 eine Beleuchtungseinheit, die ein Lichtbündel aussendet, welches von der Messteilung 11 positionsabhängig moduliert wird und schließlich auf lichtempfindliche Abtastsensoren des Abtastwagens 2 trifft.

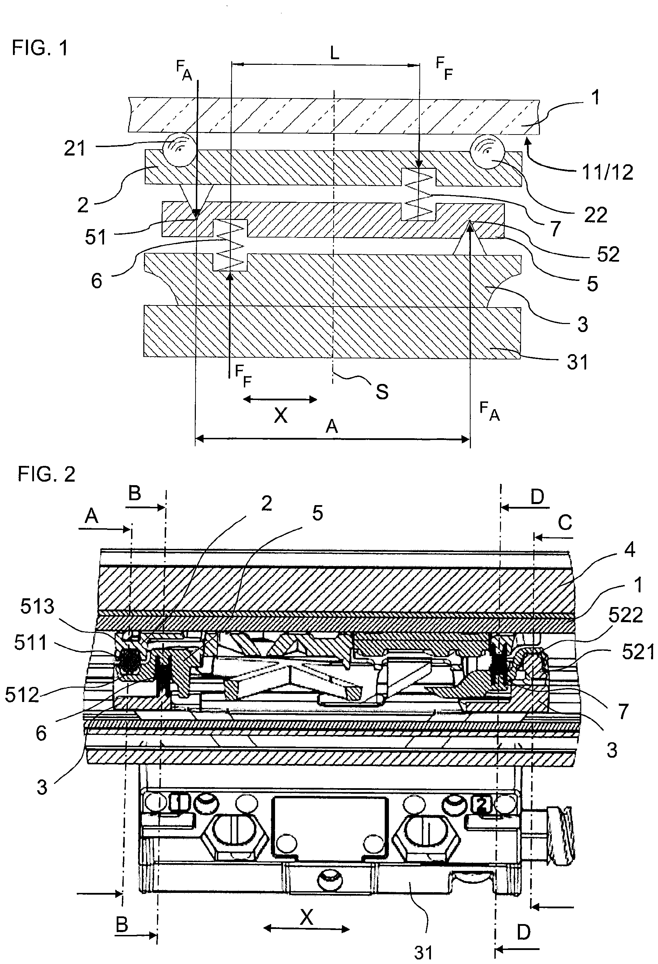

Der Maßstab 1 ist an einem Träger 4 angeordnet. Im konkreten Beispiel gemäß der Figuren 2 bis 6 ist der Träger 4 ein Hohlprofil, in dem der Maßstab 1 und der Abtastwagen 2 geschützt untergebracht sind. Der Maßstab 1 ist dabei in bekannter Weise mit dem Träger 4 verbunden, beispielsweise durch Kleben oder Klemmen. Der als Hohlprofil ausgebildete Träger 4 weist in seiner Längsrichtung in Messrichtung X verlaufend einen Schlitz auf, der durch dachförmig geneigte Dichtlippen verschlossen ist, durch die ein Mitnehmer 3 mit einem schwertförmigen Mittelstück hindurchgreift. Der Mitnehmer 3 weist einen Montagebereich 31 auf, mit dem er an einem der zu messenden Objekt, beispielsweise einem Schlitten einer Werkzeugmaschine, befestigbar ist.

Der Abtastwagen 2 ist zur exakten Parallelführung längs des Maßstabs 1 an diesem oder alternativ an dem Träger 4 geführt. Der Abtastwagen 2 stützt sich im gezeigten Ausführungsbeispiel dazu über Führungselemente 21 bis 24 an zwei senkrecht zueinander ausgerichteten Führungsflächen 12, 13 des Maßstabs 1 ab. Eine dieser Führungsflächen 12 ist die die Messteilung 11 tragende Oberfläche und die andere Führungsfläche 13 eine senkrecht dazu verlaufende Schmalseite des Maßstabs 1. Die Führungselemente 21 bis 24 können Gleitelemente sein, aber insbesondere kugelgelagerte Walzen bzw. Rollen.

Der Abtastwagen 2 ist mittels einer Kupplung in Messrichtung X steif und quer dazu nachgiebig an den Mitnehmer 3 angekoppelt. Die Kupplung umfasst ein in Messrichtung X verlaufendes Verbindungselement 5, das an einem ersten spielfreien Drehgelenk 51 am Abtastwagen 2 und an einem zweiten spielfreien Drehgelenk 52 am Mitnehmer 3 drehbar gelagert ist.

Das Verbindungselement ist gegen Zug- und Druckspannungen steif und vorzugsweise auch biegesteif ausgebildet.

In der Prinzipdarstellung gemäß Figur 1 sind die beiden Drehgelenke 51, 52 nur schematisch gezeigt.

In dem konkreten Ausführungsbeispiel gemäß der Figuren 2 bis 6 ist das erste Drehgelenk 51 als Kugelgelenk ausgebildet, bestehend aus einer Kugel 511, die einerseits in einem Aufnahmesitz 512 des Verbindungselementes 5 drehbar ist und andererseits in einem Aufnahmesitz 513 des Abtastwagens 2 drehbar gelagert ist. Die Kugel 511 zwischen dem Verbindungselement 5 und dem Abtastwagen 2 fesselt den Abtastwagen 2 in Messrichtung X starr am Verbindungselement 5, gleicht aber Drehbewegungen in allen Richtungen aus.

Das zweite Drehgelenk 52 ist ebenfalls als Kugelgelenk ausgebildet, bestehend aus einer Kugel 521, die in diesem Fall an dem Mitnehmer 3 angeformt ist, sowie einem korrespondierenden Aufnahmesitz 522 am Verbindungselement 5. Die Kugel 521 zwischen dem Verbindungselement 5 und dem Mitnehmer 3 fesselt das Verbindungselement 5 in Messrichtung X starr am Mitnehmer 3, gleicht aber Drehbewegungen in allen Richtungen aus.

Die Aufnahmesitze 512, 513, 522 können V-förmig, pfannenförmig oder als Halbschale ausgeführt sein. Wesentlich ist, dass damit ein spielfreies und in Messrichtung X unverrückbares Drehlager gebildet wird.

Die Kupplung zum Ankoppeln des Abtastwagens 2 an den Mitnehmer 3 ist auch dazu ausgelegt, den Abtastwagen 2 an zumindest eine Führungsfläche 12, 13 anzudrücken. Hierzu ist ein erstes Federmittel 6 zwischen dem Verbindungselement 5 und dem Mitnehmer 3 vorgesehen, das eine erste Andruckkraft $F_A$ auf den Abtastwagen 3 ausübt und diesen an die zumindest eine Führungsfläche 12, 13 andrückt. Das erste Federmittel 6 mit der Federkraft $F_F$ wirkt auf das Verbindungselement 5 und übt am Ort des Drehgelenkes 51 die Andruckkraft $F_A$ auf den Abtastwagen 2 aus. Bei der dargestellten symmetrischen Anordnung ist

$$F_A = F_F * L/A$$

Mit

$F_F$ Federkraft der Federelemente 6 bzw. 7
$L$ gegenseitiger Abstand der beiden Federelemente 6, 7
$A$ gegenseitiger Abstand der beiden Drehgelenke 51, 52

Darüber hinaus ist ein zweites Federmittel 7 zwischen dem Verbindungselement 5 und dem Abtastwagen 3 vorgesehen, das eine zweite Andruckkraft $F_F$ auf den Abtastwagen 3 ausübt und diesen ebenfalls an die zumindest eine Führungsfläche 12, 13 andrückt. Das erste Federmittel 6 ist von dem zweiten Federmittel 7 in Messrichtung X beabstandet angeordnet, in Figur 1 ist dieser Abstand mit L angegeben.

Ist das erste Drehgelenk 51 als Kugelgelenk ausgebildet, bestehend aus der Kugel 511, dem Aufnahmesitz 512 und dem Aufnahmesitz 513, so hält das Federmittel 6 die das Drehgelenk 51 bildenden Teile zusammen, indem die Kugel 511 den Abtastwagen 2 in Messrichtung X spielfrei am Verbindungselement 5 fesselt.

Ist das zweite Drehgelenk 52 ebenfalls als Kugelgelenk ausgebildet, bestehend aus der Kugel 521 sowie dem korrespondierenden Aufnahmesitz 522, so hält das zweite Federmittel 7 die Kugel 521 und fesselt somit das Verbindungselement 5 in Messrichtung X spielfrei am Mitnehmer 3.

Im konkreten Ausführungsbeispiel ist das erste Federmittel 6 und das zweite Federmittel 7 jeweils eine Druckfeder insbesondere eine Schraubenfeder.

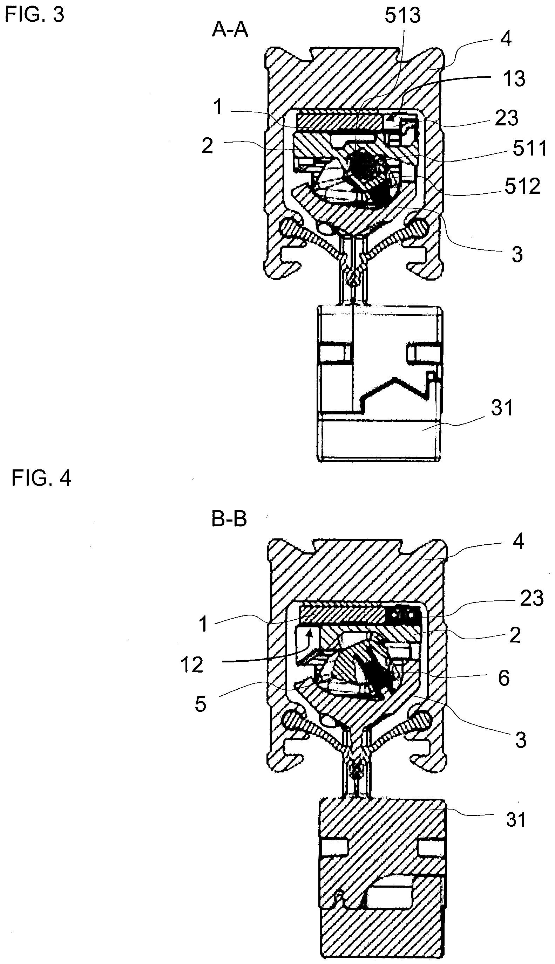

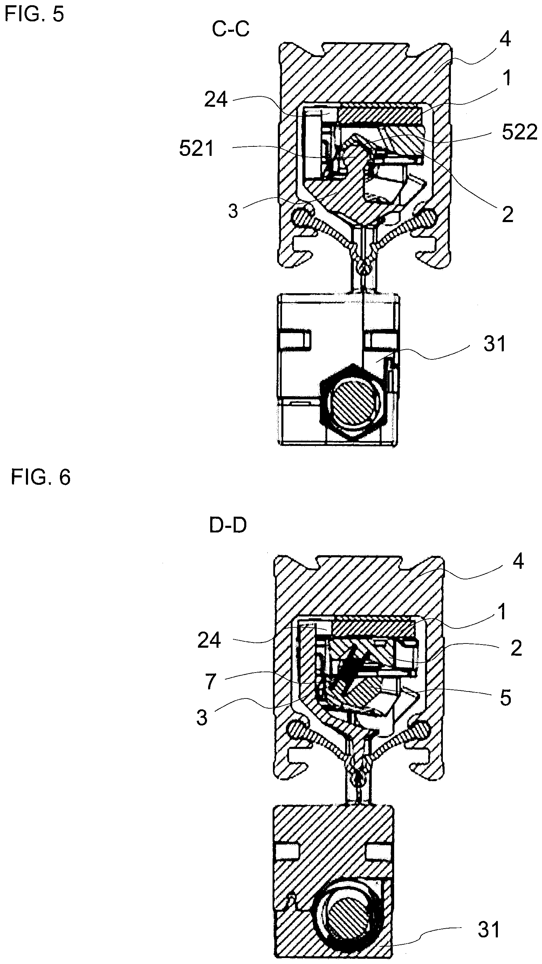

Das erste Federmittel 6 und das zweite Federmittel 7 sind im konkreten Ausführungsbeispiel derart angeordnet, dass jedes der Federmittel 6, 7 den Abtastwagen 2 mit einer Kraftkomponente an die eine Führungsfläche 12 und mit einer weiteren Kraftkomponente an die weitere Führungsfläche 13 drängen. Sind die Federmittel 6, 7 jeweils Druckfedern, sind diese zu den beiden Führungsflächen 12, 13 geneigt angeordnet, wie in den Figuren 4 und 6 dargestellt ist.

Besonders vorteilhaft ist, wenn das erste Federmittel 6 und das zweite Federmittel 7 derart angeordnet und ausgebildet sind, dass die daraus resultierende Andruckkraft auf den Abtastwagen 2 im Schwerpunkt S des Abtastwagens 2 liegt. Durch diese Maßnahme wird der Abtastwagen 2 optimal im Gleichgewicht gehalten.

Unter der Voraussetzung, die Federmittel 6 und 7 haben identische Federeigenschaften, dann ist das erste Federmittel 6 und das zweite Federmittel 7 in Messrichtung X betrachtet jeweils in gleichen Abständen L/2 vom Schwerpunkt (Massenmittelpunkt) S des Abtastwagens 2 angeordnet.

Zur optimierten Kraftübertragung sind die Federmittel 6, 7 jeweils am Ort oder zumindest in der Nähe der Drehgelenke 51, 52 angeordnet (in Messrichtung betrachtet). Der Abstand L kann dem Abstand A entsprechen. Aus Platzgründen kann - wie im dargestellten Beispiel - auch A ungleich L gewählt sein. Die Normalkräfte $F_A$ in den Drehgelenken 51, 52 und somit die Reibmomente in den Drehgelenken 51, 52 verringern sich, wenn L kleiner A gewählt wird.

Bei symmetrischer Anordnung gilt für die Auflagekraft $F_A$ in den Drehgelenken 51 sowie 52 jeweils

$$F_A = F_F * L/A$$

Die resultierende Andruckkraft auf den Abtastwagen 2 ist

$$F_A + F_F$$

Vorteilhaft ist, wenn das erste Drehgelenk 51 und das zweite Drehgelenk 52 in Messrichtung X betrachtet in gleichen Abständen A/2 vom Schwerpunkt (Massenmittelpunkt) S des Abtastwagens 2 angeordnet sind.

Liegt der Schwerpunkt S (Massenmittelpunkt) des Abtastwagens 2 nicht mittig, sollte mit dem Einsatz unterschiedlicher Federmittel und / oder unterschiedlicher Abstände zwischen den Federmitteln und den Drehgelenken die resultierende Andruckkraft aus der Mitte zum tatsächlichen Schwerpunkt S hin verschoben werden.

Die Messteilung kann eine inkrementale Messteilung sein oder eine absolute Codierung sein.

Die Erfindung ist nicht auf das optische Abtastprinzip beschränkt. Die Abtastung des Maßstabs kann auch kapazitiv, magnetisch oder induktiv erfolgen, wozu die Messteilung und die Abtastsensoren entsprechend auszubilden sind.

**Patentansprüche**

1. Längenmesseinrichtung mit

- einem in Messrichtung (X) längserstreckten Träger (4) mit einem daran angeordneten Maßstab (1);
- einem Abtastwagen (2) zur Abtastung einer Messteilung (11) des Maßstabs (1), wobei der Abtastwagen (2) an zumindest einer Führungsfläche (12, 13) in Messrichtung (X) längsgeführt ist;
- einer Kupplung, mit welcher der Abtastwagen (2) in Messrichtung (X) steif und quer dazu nachgiebig an einen Mitnehmer (3) angekoppelt ist, wobei die Kupplung ein in Messrichtung (X) verlaufendes Verbindungselement (5) umfasst, das an einem ersten Drehgelenk (51) am Abtastwagen (2) und an einem zum ersten Drehgelenk (51) in Messrichtung (X) beabstandeten zweiten Drehgelenk (52) am Mitnehmer (3) drehbar gelagert ist, und wobei der Abtastwagen (2) an die zumindest eine Führungsfläche (12, 13) angedrückt wird,

**gekennzeichnet durch**

- ein erstes Federmittel (6) zwischen dem Verbindungselement (5) und dem Mitnehmer (3), das an einer ersten Position eine Andruckkraft auf den Abtastwagen (2) ausübt und diesen an die zumindest eine Führungsfläche (12, 13) andrückt, und
- ein zweites Federmittel (7) zwischen dem Verbindungselement (5) und dem Abtastwagen (2), das von dem ersten Federmittel (6) in Messrichtung (X) beabstandet angeordnet ist, und das an einer zur ersten Position in Messrichtung (X) beabstandeten zweiten Position eine Andruckkraft auf den Abtastwagen (2) ausübt und diesen an die zumindest eine Führungsfläche (12, 13) andrückt.

2. Längenmesseinrichtung nach Anspruch 1, wobei der Abtastwagen (2) an zwei senkrecht zueinander verlaufenden Führungsflächen (12, 13) in Messrichtung (X) längsgeführt ist.

3. Längenmesseinrichtung nach Anspruch 2, wobei der Abtastwagen (2) an zwei senkrecht zueinander verlaufenden Führungsflächen (12, 13) des Maßstabs (1) in Messrichtung (X) längsgeführt ist.

4. Längenmesseinrichtung nach einem der vorhergehenden Ansprüche, wobei das erste Drehgelenk (51) und das zweite Drehgelenk (52) jeweils als ein Kugelgelenk ausgebildet sind.

5. Längenmesseinrichtung nach einem der vorhergehenden Ansprüche, wobei das erste Federmittel (6) und das zweite Federmittel (7) jeweils eine Druckfeder ist.

6. Längenmesseinrichtung nach einem der vorhergehenden Ansprüche, wobei das erste Federmittel (6) und das zweite Federmittel (7) derart angeordnet und ausgebildet sind, dass die daraus resultierende Andruckkraft auf den Abtastwagen (2) im Schwerpunkt (S) des Abtastwagens (2) liegt.

7. Längenmesseinrichtung nach einem der vorhergehenden Ansprüche, wobei das erste Federmittel (6) und das zweite Federmittel (7) - in Messrichtung (X) betrachtet - in gleichen Abständen (L/2) vom Schwerpunkt (S) des Abtastwagens (2) angeordnet sind.

8. Längenmesseinrichtung nach einem der vorhergehenden Ansprüche, wobei das erste Drehgelenk (51) und das zweite Drehgelenk (52) - in Messrichtung (X) betrachtet - in gleichen Abständen (A/2) vom Schwerpunkt (S) des Abtastwagens (2) angeordnet sind.

**Claims**

1. Length measuring device comprising

- a carrier (4) elongated in the measuring direction (X) and having a scale (1) arranged thereon;
- a scanning carriage (2) for scanning a measuring graduation (11) of the scale (1), the scanning carriage (2) being guided longitudinally in the measuring direction (X) on at least one guide surface (12, 13);
- a coupling, with which the scanning carriage (2) is coupled to a driver (3) so as to be stiff in the measuring direction (X) and flexible transversely thereto, the coupling comprising a connecting element (5) which extends in the measuring direction (X) and which is rotatably mounted on a first rotary joint (51) on the scanning carriage (2) and on a second rotary joint (52) on the driver (3) at a distance from the first rotary joint (51) in the measuring direction (x), and the scanning carriage (2) being pressed onto the at least one guide surface (12, 13),

**characterized by**

- a first spring means (6) between the connecting element (5) and the driver (3), which at a first position exerts a pressing force on the scanning carriage (2) and presses the latter onto the at least one guide surface (12, 13), and
- a second spring means (7) between the connecting element (5) and the scanning carriage (2), which is arranged at a distance from the first spring means (6) in the measuring direction (X) and which, at a second position at a distance from the first position in the measuring direction (X), exerts a pressing force on the scanning carriage (2) and presses the latter onto the at least one guide surface (12, 13).

2. Length measuring device according to Claim 1, wherein the scanning carriage (2) is guided longitudinally in the measuring direction (X) on two guide surfaces (12, 13) extending at right angles to each other.

3. Length measuring device according to Claim 2, wherein the scanning carriage (2) is guided longitudinally in the measuring direction (X) on two guide surfaces (12, 13) of the scale (1) that extend at right angles to each other.

4. Length measuring device according to one of the preceding claims, wherein the first rotary joint (51) and the second rotary joint (52) are each formed as a ball joint.

5. Length measuring device according to one of the preceding claims, wherein the first spring means (6) and the second spring means (7) are each a compression spring.

6. Length measuring device according to one of the preceding claims, wherein the first spring means (6) and the second spring means (7) are arranged and formed in such a way that the pressure force on the scanning carriage (2) that results therefrom is located at the centre of gravity (S) of the scanning carriage (2).

7. Length measuring device according to one of the preceding claims, wherein the first spring means (6) and the second spring means (7) - as viewed in the measuring direction (X) - are arranged at equal distances (L/2) from the centre of gravity (S) of the scanning carriage (2).

8. Length measuring device according to one of the preceding claims, wherein the first rotary joint (51) and the second rotary joint (52) - as viewed in the measuring direction (X) - are arranged at equal distances (A/2) from the centre of gravity (S) of the scanning carriage (2).

**Revendications**

1. Dispositif de mesure de longueur présentant
un support (4) allongé dans la direction de mesure (X) et sur lequel est disposée une échelle graduée (1),
un chariot de palpage (2) qui palpe une division de mesure (11) de l'échelle de mesure (1), le chariot de palpage (2) étant guidé longitudinalement dans la direction de mesure (X) sur au moins une surface de guidage (12, 13),
un embrayage auquel le chariot de palpage (2) est accouplé à un entraîneur (3) de manière rigide dans la direction de mesure (X) et de manière flexible transversalement par rapport à cette dernière, l'embrayage comportant un élément de liaison (5) qui s'étend dans la direction de mesure (X) et qui est monté sur le chariot de palpage (2) par une première articulation rotative (51) et sur l'entraîneur (3) par une deuxième articulation rotative (52) disposée à distance de la première articulation rotative (51) dans la direction de mesure (x), le chariot de palpage (2) étant repoussé contre la ou les surfaces de guidage (12, 13),
**caractérisé par**
un premier moyen élastique (6) situé entre l'élément de liaison (5) et l'entraîneur (3), qui exerce dans une première position une force de poussée sur le chariot de palpage (2) et qui repousse ce dernier sur la ou les surfaces de guidage (12, 13) et
un deuxième moyen élastique (7) disposé entre l'élément de liaison (5) et le chariot de palpage (2), disposé à distance du premier moyen élastique (6) dans la direction de mesure (X) et qui exerce dans une deuxième position située à distance de la première position dans la direction de mesure (X) une force de poussée sur le chariot de palpage (2) et qui repousse ce dernier sur la ou les surfaces de guidage (12, 13).

2. Dispositif de mesure de longueur selon la revendication 1, dans lequel le chariot de palpage (2) est guidé longitudinalement dans la direction de mesure (X) sur deux surfaces de guidage (12, 13) perpendiculaires l'une à l'autre.

3. Dispositif de mesure de longueur selon la revendication 2, dans lequel le chariot de palpage (2), est guidé longitudinalement dans la direction de mesure (X) sur deux surfaces de guidage (12, 13) de l'échelle de mesure (1).

4. Dispositif de mesure de longueur selon l'une des revendications précédentes, dans lequel la première articulation rotative (51) et la deuxième articulation rotative (52) sont toutes deux configurées comme articulations sphériques.

5. Dispositif de mesure de longueur selon l'une des revendications précédentes, dans lequel le premier moyen élastique (6) et le deuxième moyen élastique (7) sont tous deux un ressort de compression.

6. Dispositif de mesure de longueur selon l'une des revendications précédentes, dans lequel le premier moyen élastique (6) et le deuxième moyen élastique (7) sont disposés et configurés de telle sorte que la force de poussée sur le chariot de palpage (2) qui en résulte agisse sur le centre de masse (S) du chariot de palpage (2).

7. Dispositif de mesure de longueur selon l'une des revendications précédentes, dans lequel le premier moyen élastique (6) et le deuxième moyen élastique (7) sont disposés dans la direction de mesure (X) à des distances identiques (L/2) du centre de masse (S) du chariot de palpage (2).

8. Dispositif de mesure de longueur selon l'une des revendications précédentes, dans lequel la première articulation rotative (51) et la deuxième articulation rotative (52) dans lequel la première articulation rotative (51) et la deuxième articulation rotative (52) sont disposées dans la direction de mesure (X) à des distances identiques (L/2) du centre de masse (S) du chariot de palpage (2).

FIG. 1

FIG. 2

FIG. 3

A-A

FIG. 4

B-B

FIG. 5

C-C

FIG. 6

D-D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3327266 A1